# EUROPEAN PATENT APPLICATION

(11) **EP 2 211 253 A2**
(43) Date of publication of application: **28.07.2010**
(21) Application number: 09178014.8
(22) Date of filing: 04.12.2009
(51) Int. Cl.: G06F 3/033

(54) **Terminal, display apparatus, and method for transmitting and receiving data thereof**

(30) Priority: 16.01.2009 KR 20090003803
(71) Applicant: Samsung Electronics Co., Ltd., Suwon-si, Gyeonggi-do 442-742 (KR)
(72) Inventor: Seo, Young-kwang, Seoul (KR); Cho, Seong-il, Seoul (KR); Kang, Jung-min, Seoul (KR); Jeong, Ki-jun, Seoul (KR)
(74) Representative: Grootscholten, Johannes A.M.

(57) **Abstract**

A terminal, a display apparatus, and a method of transceiving data are provided. The terminal transmits or receives data corresponding to a specific point to which light is emitted through a communication unit if a data transmission command or a data receiving command is input. Accordingly, the display apparatus and the terminal transceive data by directly communicating with each other.

## Description

### BACKGROUND OF THE INVENTION

### 1. Field

Apparatuses and methods consistent with the general inventive concept relate to transmitting and receiving data, and more particularly, to a terminal and a display apparatus which transmit data to and receive data from each other, and a method for transmitting and receiving data thereof.

### 2. Description of the Related Art

Recently, a size of display apparatuses have been getting larger, and the larger display apparatuses may be used for lectures or advertisements.

If a display apparatus is used for a lecture, a lecturer presents the lecture while displaying images needed for the lecture on the display apparatus. In the lecture, the lecturer may need to inform students of a Uniform Resource Locator (URL) of a site from which a file can be downloaded or may need to upload a file to a site in order to provide the students with documents for homework or lecture.

If a display apparatus is used for advertisement, a URL of a site from which a user can download data related to the advertisement should be displayed on the display apparatus, and the user should access the site to download the data.

As described above, a user experiences inconvenience since the user should access a site using a personal computer in order to download data displayed on a display apparatus. Therefore, a method to conveniently download data displayed on a display is required.

### SUMMARY OF THE INVENTION

Exemplary embodiments address at least the above problems and/or disadvantages and other disadvantages not described above. Also, the present invention is not required to overcome the disadvantages described above, and an exemplary embodiment of the present invention may not overcome any of the problems described above.

According to an aspect of one or more exemplary embodiments, there is provided a terminal which transmits or receives data corresponding to a specific point to which light is emitted through a communication unit if a command to transmit data or a command to receive data is input.

According to another aspect of one or more exemplary embodiments, there is provided a display apparatus which acquires location information on a specific point to which light is emitted and identification information on a terminal using information of light detected by a detection unit, and transmits or receives data corresponding to the location information to or from the terminal through a communication unit.

According to still another aspect of one or more exemplary embodiments, there is provided a terminal which communicates with an external display apparatus, the terminal including: a light source unit which emits light to a specific point on a screen of the display apparatus, and transmits identification information regarding the terminal to the display apparatus; a communication unit which is communicably linked to the display apparatus; and a controlling unit which transmits to the display apparatus or receives from the display apparatus data corresponding to the specific point to which the light is emitted through the communication unit if a download command or an upload command is input, respectively.

The display apparatus may display a plurality of items on the screen, and the controlling unit may receive the data corresponding to at least one item of the plurality of items displayed on the specific point to which the light is emitted through the communication unit if the download command is input.

If the upload command is input, the controlling unit may transmit the data to the display apparatus through the communication unit so that the data is stored in a storage space corresponding to the specific point to which the light is emitted.

The transmitted or received data may include at least one of a data file and an address having a data file.

The terminal may further include a image acquisition unit which obtains an image of an object, wherein the specific point to which the light of the light source unit is emitted is displayed on an image to be photographed by the image acquisition unit.

The light source unit may be an infrared radiation source.

The communication unit may be connected to the display apparatus over a wireless communication unit.

According to still another aspect of one or more exemplary embodiments, there is provided a display apparatus which communicates with an external terminal, the display apparatus including: a display unit which displays a plurality of items on a screen of the display unit; a detection unit which detects light emitted from the external terminal to the screen; a communication unit which is communicably linked to the terminal; and a controlling unit which recognizes location information regarding a specific point to which light is emitted and identification information regarding the terminal using information of the light detected by the detection unit, and transmits to the terminal or receives from the terminal data corresponding to the location information through the communication unit.

If a download request is received from the terminal, the controlling unit may transmit the data corresponding to the specific point to which the light is emitted to the terminal through the communication unit, wherein the specific point corresponds to at least one item of the plurality of items on the screen.

If an upload request is received from the terminal, the controlling unit may receive the data from the terminal through the communication unit, and stores the received data in a storage space corresponding to the specific point to which the light is emitted, wherein the specific point corresponds to at least one item of the plurality of items on the screen.

The transmitted or received data may include at least one of a data file and an address having a data file.

If the received data includes the address having the data file, the controlling unit may receive the data file from the address.

According to still another aspect of one or more exemplary embodiments, there is provided a method of transceiving data of a terminal capable of communicating with an external display apparatus, the method including: emitting light to a specific point on a screen of the display apparatus; transmitting identification information regarding the terminal to the display apparatus using the emitted light; and transmitting to the display apparatus or receiving from the display apparatus data corresponding to the specific point to which the light is emitted.

The method may further include transmitting a download request to the display apparatus if a download command is input, wherein the display apparatus displays a plurality of items on the screen, and, in the receiving, the data corresponding to an item displayed on the specific point to which the light is emitted is received.

The method may further include transmitting an upload request to the display apparatus if an upload command is input, wherein, in the transmitting, the data is transmitted to the display apparatus so that the data are stored in a storage space corresponding to the specific point to which the light is emitted.

The transmitted or received data may include at least one of a data file and an address having a data file.

The specific point to which the light is emitted is displayed on an image to be obtained by a image acquisition unit.

The light may be infrared rays.

The operation of transmitting or receiving may transmit or receive data via wireless communication.

According to still another aspect of one or more exemplary embodiments, there is provided a method of transceiving data of a display apparatus capable of communicating with an external terminal, the method including: displaying a plurality of items on a screen of the display apparatus; detecting light emitted from the external terminal to the screen; recognizing location information regarding a specific point to which the light is emitted and identification information regarding the terminal using information of the detected light; and transmitting to the terminal or receiving from the terminal data corresponding to the location information.

If a download request is received from the terminal, in the transmitting, the data corresponding to the specific point to which the light is emitted may be transmitted to the terminal, wherein the specific point corresponds to at least one item of the plurality of items on the screen.

If an upload request is received from the terminal, in the receiving, the data may be received from the terminal, and stored in a storage space corresponding to the specific point to which the light is emitted, wherein the specific point corresponds to at least one item of the plurality of items on the screen.

The transmitted or received data may include at least one of a data file and an address having a data file.

The method may further include receiving the data file from the address if the received data include the address having the data file.

### BRIEF DESCRIPTION OF THE DRAWINGS

The above and/or other aspects will be more apparent by describing certain exemplary embodiments of the present invention with reference to the accompanying drawings, in which:
FIG. 1A is a block diagram illustrating a terminal and a display apparatus according to an exemplary embodiment;
FIG. 1B is a view illustrating the internal structure of a terminal and a display apparatus according to an exemplary embodiment;
FIG. 2 is a flowchart of a method of transceiving data by a terminal according to an exemplary embodiment;
FIG. 3 is a flowchart of a method of transceiving data at a display apparatus according to an exemplary embodiment;
FIG. 4 is a flowchart of a process of downloading a file according to an exemplary embodiment;
FIG. 5 is a view illustrating a process of downloading a file using a image acquisition unit of a terminal according to an exemplary embodiment;
FIG. 6 is a flowchart of a process of uploading a file in detail according to an exemplary embodiment;
FIG. 7A is a view illustrating a process of uploading a file to a display apparatus using a terminal according to an exemplary embodiment; and
FIG. 7B is a view illustrating a screen of a display apparatus after a file is uploaded according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

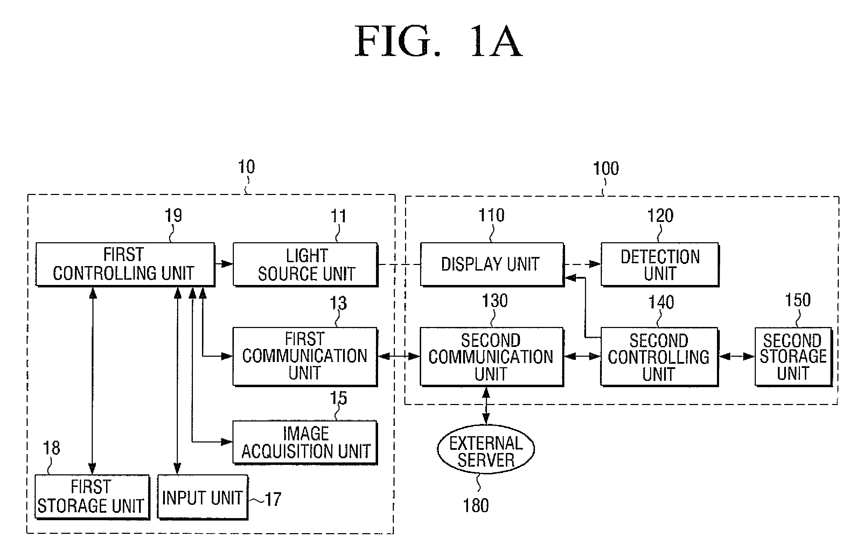

FIG. 1A is a block diagram illustrating a terminal 10 and a display apparatus 100 according to an exemplary embodiment.

The terminal 10 is connected to the display apparatus 100 through wire or wireless communication to transceive data. The terminal 10 may be mobile electronic devices such as a mobile phone, an MPEG-1 Audio Layer 3 (MP3) player, a portable media player (PMP), or a personal digital assistant (PDA). The display apparatus 100 may be a liquid crystal display (LCD), a plasma display panel (PDP), an organic light emitting diode (OLED), or a projection device.

Referring to FIG. 1A, the terminal 10 includes a light source unit 11, a first communication unit 13, a image acquisition unit 15, an input unit 17, a first storage unit 18, and a first controlling unit 19.

The light source unit 11 emits light to a specific point on a screen of the display apparatus 100, and transmits identification information regarding the terminal 10 to the display apparatus 100. The identification information regarding the terminal 10 may be detailed information regarding the kind of the terminal 10. The identification information may include information regarding the terminal 10 such as type, model name, serial number, discrimination ID, and so on.

Specifically, the light source unit 11 provides the identification information regarding the terminal 10 using light by radiating light in various patterns. The light source unit 11 provides the display apparatus 100 with information regarding the terminal 10 by emitting light having a specific pattern to the display apparatus 100.

The light source unit 11 includes at least one light emitting element. The more light emitting elements are used, the more information the light source unit 11 provides. However, if a large number of light emitting elements are used, the light source unit 11 occupies a large portion of the terminal 10.

Any element which emits light can be used as a light emitting element of the light source unit 11, and for example, an infrared rays light emitting diode (LED) or a laser may be used. If infrared rays are emitted by a light emitting element, the light emitting element does not affect the quality of an image displayed on a screen of a display unit 110 of the display apparatus 100 since eyes of a user cannot perceive the infrared rays.

The first communication unit 13 is connected to the display apparatus 100 through wire or wireless communication. The wireless communication may include an IEEE 802.1x wireless LAN, Bluetooth communication, ultra-wideband (UWB) communication, ZigBee communication, 60-GHz communication, and so on.

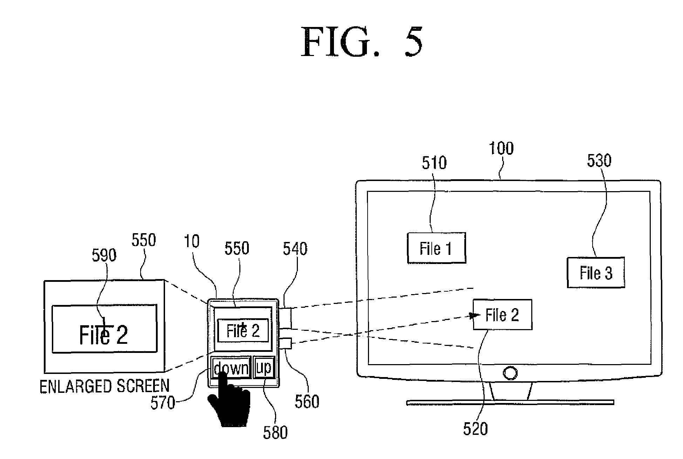

The image acquisition unit 15 obtains an image of an object. The image acquisition unit 15 designates a specific point to which light radiated from the light source unit 11 is emitted on an image to be obtained. For example, the image acquisition unit 15 includes a monitor (not shown) through which a user views an image to be obtained, and a specific point to which light of the light source unit 11 is emitted may be displayed on the monitor. This will be explained later with reference to FIG. 5. The image acquisition unit 15 further includes a viewfinder (not shown) to show an image to be obtained, and it may be implemented such that a specific point to which light of the light source unit 11 is emitted is designated on the viewfinder as a cross mark.

If the terminal 10 includes the image acquisition unit 15, a user can recognize a specific point to which infrared rays are emitted by viewing a monitor screen of the image acquisition unit 15 or a viewfinder although the light source unit 11 emits infrared rays which eyes of a user cannot perceive. Accordingly, even though the light source unit 11 is embodied as an element emitting infrared rays which eyes of a user cannot perceive, the user may easily point out a desired point on the screen of the display unit 110 of the display apparatus 100 using the terminal 10 located a distance apart from the display apparatus 100. Although the display apparatus 100 is located far apart from a user to be used for a lecture, the user can easily select and download an item displayed on the screen of the display unit 110 of the display apparatus 100 using the image acquisition unit 15 of the terminal 10.

The input unit 17 receives a command from a user and transfers the command to the first controlling unit 19. The input unit 17 may include a download button to input a download command and an upload button to input an upload command.

The first storage unit 18 stores a data file received from the display apparatus 100. The first storage unit 18 may be implemented as a hard disc drive (HDD), a flash memory, and so on.

The first controlling unit 19 controls overall operations of the terminal 10. If a download command or an upload command is input through the input unit 17, the first controlling unit 19 transmits or receives data corresponding to a specific point to which light of the light source unit 17 is emitted through the first communication unit 13.

Specifically, if a plurality of items are displayed on the screen of the display unit 110 of the display apparatus 100, and a download command is input, the first controlling unit 19 receives data corresponding to an item displayed on the specific point to which the light is emitted through the first communication unit 13. For example, if a download command is input while the light source unit 11 emits light on an item 'File 2' displayed on the screen of the display unit 110 of the display apparatus 100, the first controlling unit 19 receives File 2 from the display apparatus 100.

If an upload command is input, the first controlling unit 19 transmits data to the display apparatus 100 through the first communication unit 13 so that the data is stored in a storage space corresponding to a specific point to which light is emitted. For example, if an upload command is input while the light source unit 11 emits light on an item 'Folder 1' displayed on the screen of the display unit 110 of the display apparatus 100, the first controlling unit 19 transmits data to the display apparatus 100 so that the data is stored in Folder 1 corresponding to the item 'Folder 1'.

The data transmitted or received by the first controlling unit 19 include at least one of a data file and an address to which a data file is stored. If a data file is received, the first controlling unit 19 stores the received data file in the first storage unit 18. Alternatively, if an address having a data file is received, the first controlling unit 19 may download the data file from the address. The address may include a Uniform Resource Indicator (URI) or a Uniform Resource Locator (URL), and may further have a hyperlink function for a convenient access to the address through the Internet.

The first controlling unit 19 controls an emitting condition of the light radiated by the light source unit 11 to provide the display apparatus 100 with identification information regarding the terminal 10 using light. The emitting condition may include brightness, on or off state, flickering, and so on. Specifically, the first controlling unit 19 converts a code corresponding to the identification information regarding the terminal 10 into an electrical signal to drive the light source unit 11, and controls the emitting condition of the light source unit 11. The first controlling unit 19 transmits the identification information regarding the terminal 10 to the display apparatus 100 using the light of the light source unit 11.

Referring to FIG. 1A, the display apparatus 100 may include the display unit 110, a detection unit 120, a second communication unit 130, a second controlling unit 140, and a second storage unit 150.

The display unit 110 displays an image and a plurality of items on a screen. The plurality of items may correspond to specific files, respectively. The display unit 110 may display items representing specific files on the screen. The display unit 110 may be implemented in various manners, and for example, may be a projection display device, an OLED, a PDP, or an LCD. The terminal 10 emits light on the screen of the display unit 110.

The detection unit 120 detects light emitted from the light source unit 110 of the terminal 10 to the screen of the display unit 110. If the light radiated from the light source unit 11 is infrared rays, the detection unit 120 may include an infrared pass filter to detect only infrared rays.

The detection unit 120 may include a plurality of pixel elements. The detection unit 120 may employ any optical sensor which detects light. For example, a charge coupled device (CCD) optical sensor or a complementary metal oxide semiconductor (CMOS) optical sensor may be used as the detection unit 120.

The second communication unit 130 is connected to the terminal 10 through wire or wireless communication. The wireless communication may utilize an IEEE 802.1x wireless LAN, Bluetooth communication, UWB communication, ZigBee communication, 60-GHz communication, and so on.

The second storage unit 150 stores a data file received from the terminal 10 or an external server 180. The second storage unit 150 may be implemented as an HDD, a flash memory, and so on.

The second controlling unit 140 controls overall operations of the display apparatus 100. The second controlling unit 140 recognizes location information regarding a specific point to which light emitted and identification information regarding the terminal 10 using information regarding light detected by the detection unit 120. The second controlling unit 140 transmits or receives data corresponding to the location information to or from the terminal 10 through the second communication unit 130.

Specifically, if a download request is received from the terminal 10, the second controlling unit 140 transmits data corresponding to an item displayed at a specific point to which light is emitted to the terminal 10 through the second communication unit 130. For example, if a download request is received while the light source unit 11 emits light on the item 'File 2' among items displayed on the screen of the display apparatus 100, the second controlling unit 140 transmits File 2 to the terminal 10 through the communication unit 130.

If an upload request is received from the terminal 10, the second controlling unit 140 receives data from the terminal 10 through the second communication unit 130, and stores the received data in a storage space corresponding to a specific point to which light is emitted in the second storage unit 150. For example, if an upload request is received while the light source unit 11 emits light on the item 'Folder 1' among items displayed on the screen of the display apparatus 100, the second controlling unit 140 receives File 2 from the terminal 10 through the second communication unit 130, and stores the received File 2 in a storage space corresponding to the item 'Folder 1' in the second storage unit 150.

The data which is transmitted and received by the display apparatus 100 includes at least one of a data file and an address to which a data file is stored. If a data file is received, the second controlling unit 140 stores the received data file in the second storage unit 150. Alternatively, if an address having a data file is received, the second controlling unit 140 may download the data file from the address. For example, if the display apparatus 100 receives an address of a file stored in the external server 180 from the terminal 10, the second controlling unit 140 may download the file corresponding to the address from the external server 180. The address may include a URI or a URL, and may further have a hyperlink function for a convenient access to the address through the Internet.

The second controlling unit 140 recognizes identification information with reference to the light detected by the detection unit 120. The identification information regarding the terminal 10 may indicate the kind of the terminal 10. The identification information may include information regarding the terminal 10 such as a type (for example, a mobile phone, a digital camera, and so on), a model name, a serial number, and so on.

The second controlling unit 140 recognizes the location information regarding the point to which light is emitted with reference to the light detected by the detection unit 120. The location information includes coordinates of the location corresponding to the point to which the light source unit 11 of the terminal 10 emits light.

Specifically, the second controlling unit 140 recognizes identification information regarding an object with reference to brightness change pattern of the detected light. The second controlling unit 140 may be aware of the location of an object with reference to a pixel from which light is detected among pixels included in a optical sensor.

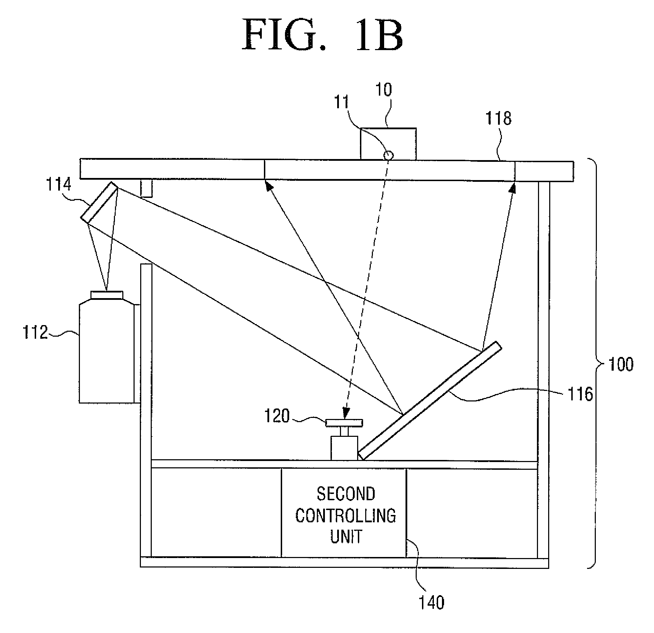

As described above, the terminal 10 and the display apparatus 100 shown in FIG. 1A transceive data therebetween. An example of the terminal 10 and the display apparatus 100 according to an exemplary embodiment will be explained with reference to FIG. 1B. FIG. 1B is a view illustrating the internal structure of the terminal 10 and the display apparatus 100 according to an exemplary embodiment. FIG. 1B depicts an internal structure of the terminal 10 and the display apparatus 100, not all elements.

Referring to FIG. 1B, the terminal 10 includes the light source unit 11. The display apparatus 100 includes a projector 112, a first reflecting mirror 114, a second reflecting mirror 116, a screen 118, the detection unit 120, and the second controlling unit 140. Herein, the projector 112, the first reflecting mirror 114, the second reflecting mirror 116, and the screen 118 constitute the display unit 110 of FIG. 1A.

The terminal 10 is placed on the screen 118 of the display apparatus 100. The light source unit 11 of the terminal 10 emits light to the screen 118 of the display apparatus 100. The terminal 10 may emit light to the screen 118 while the terminal 10 is placed far apart from the display apparatus 100. The light emitted from the light source unit 11 to the screen 118 is detected by the detection unit 120.

The light source unit 11 may radiate various types of light, for example, radiate infrared rays.

The terminal 10 controls an emitting condition of the light radiated by the light source unit 11, and provides the display apparatus 100 with identification information regarding the terminal 10. Specifically, the light radiated by the light source unit 11 is emitted to the detection unit 120 passing through the screen 118. Accordingly, the terminal 10 provides the display apparatus 100 with identification information using the light.

The projector 112 projects light representing an image to be displayed. The light emitted from the projector 112 is reflected from the first and second reflecting mirrors 114 and 116, and is projected onto the screen 118. By doing so, an image is displayed on the screen 118. The detection unit 120 detects the light emitted from the terminal 10.

As the display apparatus 100 detects the light emitted from the terminal 10, the display apparatus 100 may recognize the terminal 10.

While the display unit 110 of the display apparatus 100 is embodied as a projection device in this exemplary embodiment, Other types of display devices may be utilized. For example, the display unit 110 may be alternatively embodied as an LCD device.

As described above, the terminal 10 and the display apparatus 100 may transceive data therebetween.

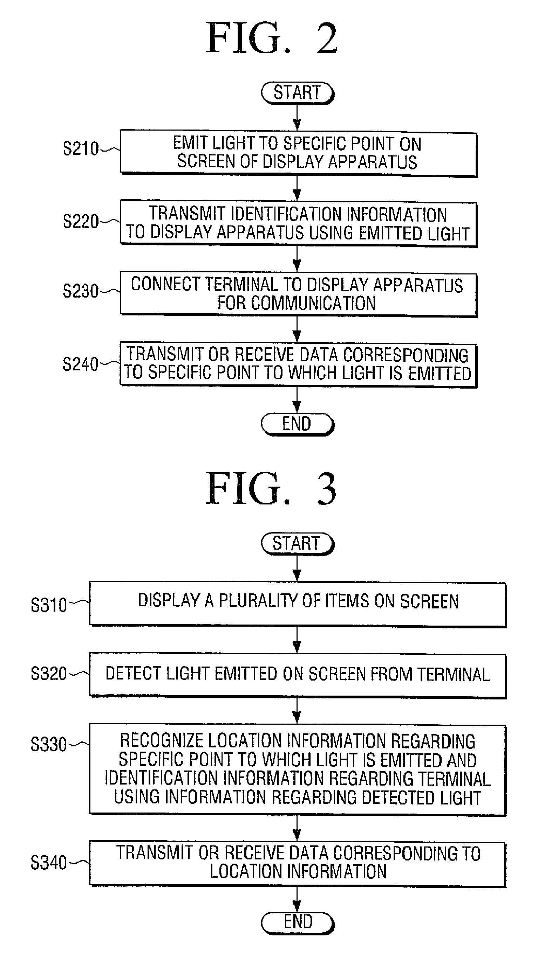

Hereinbelow, a method by which the terminal 10 transceives data will be explained with reference to FIG. 2. FIG. 2 is a flowchart provided to explain a method by which the terminal 100 transceives data.

The terminal 10 emits light to a specific point on the screen of the display apparatus 100 (5210). As the specific point is decided by a user, the user adjusts the position of the terminal 10 to emit the light on the specific point from which data are downloaded or to which data are uploaded. In this situation, the user may perceive the specific point to which the light source unit 11 emits the light using the viewfinder of the image acquisition unit 15 or the monitor screen.

The terminal 10 transmits the identification information to the screen of the display apparatus 100 using the emitted light (S5220). The terminal 10 is connected to the display apparatus 100 for communication (S230). In more detail, the first communication unit 13 of the terminal 10 sends or receives an IP address to or from the second communication unit 13 of the display apparatus 100 in order to set the connection therebetween.

If a download command or an upload command is input, the terminal 10 transmits or receives data corresponding to the specific point to which the light is emitted (S240).

In more detail, if a user inputs a download command, the terminal 10 transmits a download request to the display apparatus 100. Then, the terminal 10 receives data corresponding to an item displayed on the specific point to which the light is emitted among a plurality of items displayed on the screen of the display apparatus 100.

If a user inputs an upload command, the terminal 10 transmits an upload request to the display apparatus 100. Then, the terminal 10 transmits data to the display apparatus 100 to store the data in a storage space corresponding to the specific point to which the light is emitted.

By performing the above operations, the terminal 10 transmits data to the display apparatus 100.

The process by which the display apparatus 100 transceives data will be explained with reference to FIG. 3. FIG. 3 is a flowchart provided to explain a method by which the display apparatus 100 transceives data according to an exemplary embodiment.

The display apparatus 100 displays a plurality of items on a screen (S310). The display apparatus 100 detects the light emitted on the screen from the terminal 10 (S320). The display apparatus 100 recognizes location information regarding the specific point to which the light is emitted and identification information regarding the terminal 10 using information regarding the detected light (S330).

If a download request or an upload request is received, the display apparatus 100 transmits or receives data corresponding to the location information (S340).

In more detail, if a download request is received from the terminal 10, the display apparatus 100 transmits data corresponding to an item displayed on the specific point to which the light is emitted among a plurality of items to the terminal 10.

If an upload request is received from the terminal 10, the display apparatus 100 receives data from the terminal 10, and stores the received data in a storage space corresponding to the specific point to which the light is emitted.

The data transceived by the display apparatus 100 includes at least one of a data file and an address to which a data file is stored. If a data file is received, the display apparatus 100 stores the received file in the second storage unit 150. Alternatively, if an address having a data file is received, the display apparatus 100 downloads the data file from the address. For example, if the display apparatus 100 receives an address of a file stored in the external server 180 from the terminal 10, the display apparatus 100 may download the file corresponding to the address from the external server 180.

Through the above operations, the terminal 10 and the display apparatus 100 may transceive data therebetween.

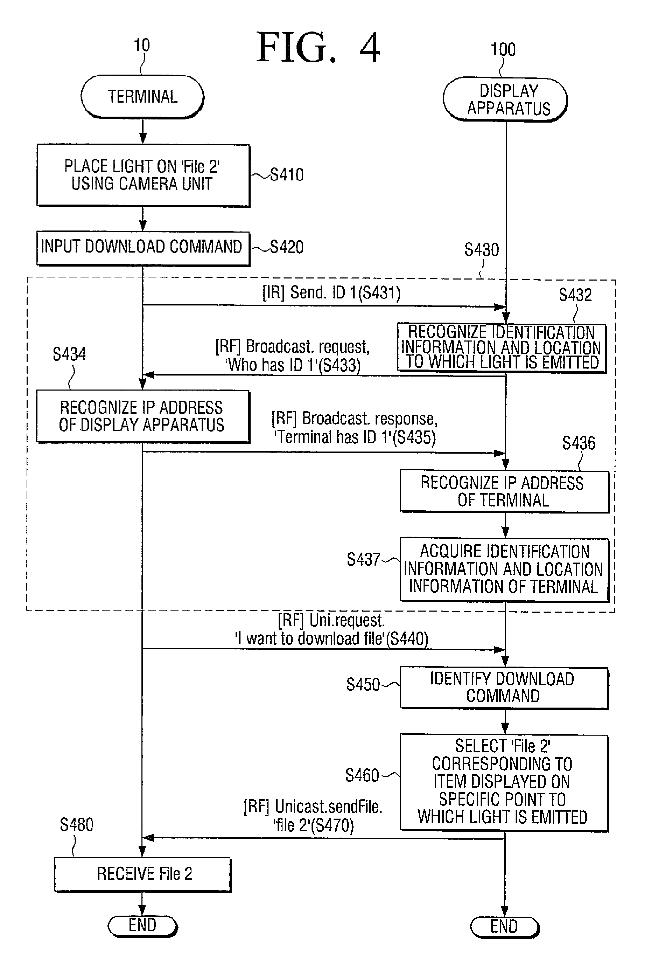

The process that the terminal 10 downloads a data file from the display apparatus 100 will be explained in detail with reference to FIGS. 4 and 5. FIG. 4 is a flowchart provided to explain the process of downloading a file according to an exemplary embodiment.

A user places the light of the light source unit 11 on the item 'File 2' displayed on the display apparatus 100 using the image acquisition unit 15 of the terminal 10 (S410). The user may perceive the location to which the light source unit 11 emits the light using the viewfinder of the image acquisition 15 or the monitor screen.

A user inputs a download command using the input unit 17 of the terminal 10 (S420). That is, the user desires to download File 2 stored in the display apparatus 100.

The terminal 10 and the display apparatus 100 set the connection therebetween (S430). In more detail, the terminal 10 transmits the identification information 'ID 1' to the display apparatus 100 using the light of the light source unit 11 (S431). The display apparatus 100 recognizes the identification information 'ID 1' transmitted from the terminal 10 and the location information regarding a specific point to which light is emitted (S432).

The display apparatus 100 broadcasts a request inquiring which terminal has 'ID 1' through the second communication unit 130 (S433). The terminal 10 recognizes an IP address of the display apparatus 100 using the broadcast information (S434). The terminal 10 broadcasts the response that the terminal 10 has 'ID 1' (S435).

The display apparatus 100 recognizes the IP address of the terminal 10 (S436). The display apparatus 100 acquires the identification information 'ID 1' of the terminal 10 and the location information regarding the specific point to which light is emitted (S437).

The terminal 10 and the display apparatus 100 may set the connection between the first and second communication units 13 and 130 through the above operations.

The terminal 10 transmits a download request to the display apparatus 100 (S440). The display apparatus 100 identifies a download command (S450), and selects a file corresponding to the item displayed on the specific point to which light is emitted, that is, File 2, in order to download the file (S460). The display apparatus 100 transmits the file to be downloaded, that is, File 2, to the terminal 10 (S470). The terminal receives File 2 (S480).

FIG. 5 is a view illustrating the process of downloading a file using the image acquisition unit of the terminal 10 according to an exemplary embodiment.

Referring to FIG. 5, an item 'File 1' 510, an item 'File 2' 520, and an item 'File 3' 530 are displayed on the screen of the display apparatus 100. The terminal 10 includes an image capturing unit 540, a monitor screen 550, a light source unit 560, a download button 570, and an upload button 580.

The image capturing unit 540 and the monitor screen 550 are included in the image acquisition unit 15 of FIG. 1A. The light source unit 560 corresponds to the light source unit 11 of FIG. 1A, and the download button 570 and the upload button 580 are included in the input unit 17 of FIG. 1A.

The image capturing unit 540 obtains an image of an object. The monitor screen 550 displays an image to be obtained. The download button 570 is used to input a download command and the upload button 580 is used to input an upload command.

In FIG. 5, the light source unit 560 of the terminal 10 is emitting light to the item 'File 2' 520. This is determined through a cross mark 590 displayed on the monitor screen 550. That is, the cross mark 590 represents a specific point to which the light source unit 560 emits the light.

If a user presses the download button 570 while the cross mark 590 is placed on the item 'File 2' 520 as shown in FIG. 5, the display apparatus 100 transmits File 2 corresponding to the item 'File 2' 520 to the terminal 10. That is, the display apparatus 100 selects a file with reference to the specific point to which the light source unit 560 of the terminal 10 emits light, in order to download the file.

Accordingly, a user may select a file to be downloaded among files displayed on the display apparatus 100, using an image which is obtained by the image capturing unit 540 of the terminal 10 and thus displayed on the monitor screen 550.

The cross mark 590 is displayed on the monitor screen 550 in this exemplary embodiment, but the cross mark 590 may also be displayed on the viewfinder of the image acquisition unit 15.

By doing so, a user may easily select and download a desired file using the image acquisition unit 15. In addition, a user downloads a desired file only by connecting the terminal 10 to the display apparatus 100 without accessing the Internet and thus the user can download a desired file quickly from the display apparatus 100.

The terminal 10 downloads a file from the display apparatus 100 using the image acquisition unit 15 in this exemplary embodiment, but the upload operation may also be performed.

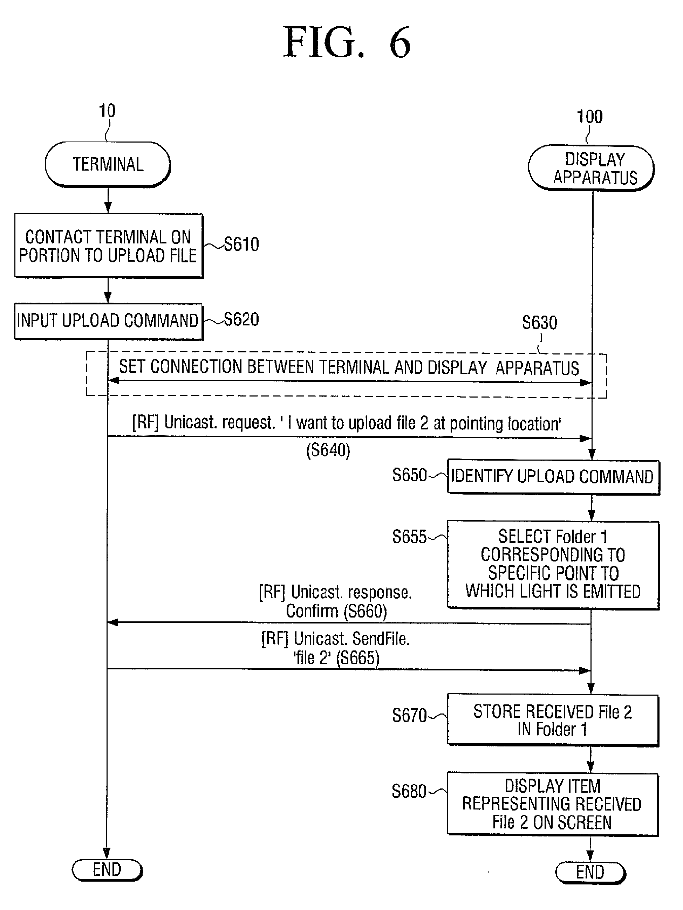

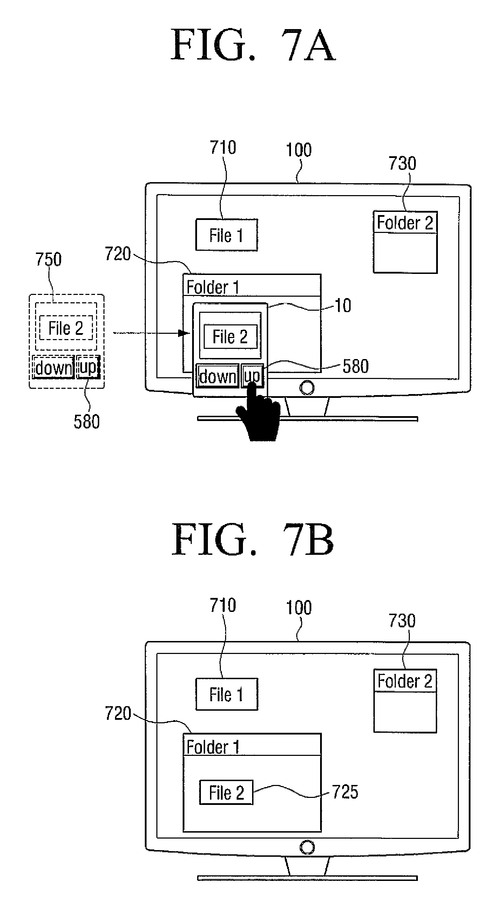

Hereinbelow, the process that the terminal 10 uploads data to the display apparatus 100 will be explained in detail with reference to FIGS. 6, 7A, and 7B. FIG. 6 is a flowchart provided to explain the process of uploading a file in detail according to an exemplary embodiment.

A user contacts the terminal 10 on a desired portion of the screen of the display apparatus 100 to upload a file (S610). A user inputs an upload command (S620). The terminal 10 and the display apparatus 100 may set the connection therebetween (S630). The process of setting the connection is similar to operation S430 of FIG. 4, and thus the detailed description will be omitted.

After setting the connection between the terminal 10 and the display apparatus 100, the terminal 10 transmits a request to upload File 2 to the display apparatus 100 (S640). The display apparatus 100 identifies an upload command (S650), and selects a folder corresponding to the specific point to which the light is emitted, that is, Folder 1, to upload the folder (S655). The display apparatus 100 transmits to the terminal 10 a response that File 2 can be uploaded (S660).

The terminal 10 transmits File 2 to the display apparatus 100 (S665). The display apparatus 100 stores the received File 2 in Folder 1 (S670). The display apparatus 100 displays an item representing the received File 2 on the screen (S680). A user may perceive that File 2 is uploaded from the terminal 10 to the display apparatus 100.

FIG. 7A is a view illustrating the process of uploading a file to a display apparatus 100 using the terminal 10 according to an exemplary embodiment, and FIG. 7B is a view illustrating the screen of the display apparatus 100 after the file is uploaded according to an exemplary embodiment.

Referring to FIG. 7A, an item 'File 1' 710, an item 'Folder 1' 720, and an item 'Folder 2' 730 are displayed on the screen of the display apparatus 100.

FIG. 7A depicts the situation that a user touches the terminal 10 on the item 'Folder 1' 720. In this situation, the terminal 10 has the light source unit 11 contacting the display apparatus 100. Accordingly, the light of the light source unit 11 is emitted to the portion of the display apparatus 100 on which the terminal 10 contacts.

If a user presses the upload button 580 while the above situation is retained, the display apparatus 100 recognizes that a folder to be uploaded is Folder 1 since the light of the light source unit 11 is emitted to Folder 1. File 2 is displayed on a monitor screen 750 of the terminal 10 to be uploaded.

The display apparatus 100 stores the received File 2 in a storage space corresponding to Folder 1. The display apparatus 100 displays an item 'File 2' 725 within an item 'Folder 1' 720 as shown in FIG. 7B to represent that the received File 2 is stored in Folder 1.

A user may easily upload the file stored in the terminal 10 to the display apparatus 100 through the above operations.

The terminal 10 uploads a file to the display apparatus 100 by performing the operation that the terminal 10 contacts on the screen of the display apparatus 100 in this exemplary embodiment, but the present invention may also embody the operation that the terminal 10 downloads a file from the display apparatus 100.

According to various exemplary embodiments as described above, if a command to transmit data or a command to receive data is input, it is possible to use the terminal to transmit or receive data corresponding to a specific point to which light is emitted through the first communication unit. Thus, the data are transceived between the display apparatus and the terminal through the communication. Accordingly, a user may directly download data from the display apparatus to the terminal without accessing a specific site.

Since the identification information regarding the terminal is provided to the display apparatus, it is not necessary for a user to input personally the information regarding the terminal. If a image acquisition of the terminal is used, a user may download a file by selecting an item representing the file from far apart.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A terminal which communicates with an external display apparatus, the terminal comprising:
a light source unit which emits light to a specific point on a screen of the display apparatus, and transmits identification information regarding the terminal to the display apparatus;
a communication unit which is communicably linked to the display apparatus; and
a controlling unit which transmits to the display apparatus or receives from the display apparatus data corresponding to the specific point to which the light is emitted through the communication unit if a download command or an upload command is input, respectively.

2. The terminal as claimed in claim 1, wherein the display apparatus displays a plurality of items on the screen, and the controlling unit receives the data corresponding to at least one item of the plurality of items displayed on the specific point to which the light is emitted through the communication unit if the download command is input.

3. The terminal as claimed in claim 1 or 2, wherein if the upload command is input, the controlling unit transmits the data to the display apparatus through the communication unit so that the data is stored in a storage space corresponding to the specific point to which the light is emitted.

4. The terminal as claimed in any one of claims 1 to 3, wherein the transmitted or received data comprises at least one of a data file and an address having a data file.

5. The terminal as claimed in claim 4, wherein the address comprises a Uniform Resource Indicator (URI) or a Uniform Resource Locator (URL), and has a hyperlink function for connection through the Internet.

6. The terminal as claimed in any one of claims 1 to 5, further comprising:
a image acquisition unit which obtains an image of an object,
wherein the specific point to which the light of the light source unit is emitted is displayed on an image to be obtained by the image acquisition unit.

7. The terminal as claimed in any one of claims 1 to 6, wherein the light source unit is an infrared radiation source.

8. The terminal as claimed in any one of claims 1 to 7, wherein the communication unit is communicably linked to the display apparatus via a wireless communication link.

9. A display apparatus which communicates with an external terminal, the display apparatus comprising:
a display unit which displays a plurality of items on a screen;
a detection unit which detects light emitted from the external terminal to the screen;
a communication unit which is communicably linked to the terminal; and
a controlling unit which recognizes location information regarding a specific point to which light is emitted and identification information regarding the terminal using information of the light detected by the detection unit, and transmits to the terminal or receives from the terminal data corresponding to the location information through the communication unit.

10. The display apparatus as claimed in claim 9, wherein if a download request is received from the terminal, the controlling unit transmits the data corresponding to the specific point to which the light is emitted to the terminal through the communication unit, and
wherein the specific point corresponds to at least one item of the plurality of items on the screen.

11. The display apparatus as claimed in claim 9 or 10, wherein if an upload request is received from the terminal, the controlling unit receives the data from the terminal through the communication unit, and stores the received data in a storage space corresponding to the specific point to which the light is emitted, and
wherein the specific point corresponds to at least one item of the plurality of items on the screen.

12. The display apparatus as claimed in any one of claims 9 to 11, wherein the transmitted or received data comprises at least one of a data file and an address having a data file.

13. The display apparatus as claimed in claim 12, wherein the address comprises a Uniform Resource Indicator (URI) or a Uniform Resource Locator (URL), and has a hyperlink function for connection through the Internet.

14. The display apparatus as claimed in claim 12, wherein if the received data comprises the address having the data file, the controlling unit receives the data file from the address.
